# EUROPEAN PATENT APPLICATION

(11) **EP 4 668 984 A1**
(43) Date of publication of application: **24.12.2025**
(21) Application number: 24757129.2
(22) Date of filing: 08.02.2024
(51) Int. Cl.: H04W 72/25, H04W 72/12, H04W 72/04, H04W 24/08, H04B 7/06, H04L 1/18, H04W 92/18, H04L 5/00

(54) **MULTI-SPACE SETTING-BASED INTER-DEVICE PHYSICAL CHANNEL TRANSMISSION AND RECEPTION METHOD AND APPARATUS**

(30) Priority: 14.02.2023 KR 20230019279; 06.04.2023 KR 20230045652
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Jung, Minkyu
(86) International application number: PCT/KR2024/001869
(87) International publication number: WO 2024/172400

(57) **Abstract**

Proposed is an operating method of a first device (100) in a wireless communication system. The method may comprise the steps of: receiving, from a second device (200), a reference signal related to a first beam used for reception of an inter-device physical shared channel; obtaining a measurement value for the reference signal; and determining, on the basis of the measurement value and a threshold value, whether to drop transmission of an inter-device physical feedback channel related to reception of the inter-device physical shared channel.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: receiving, from a second device, a reference signal related to a first beam used in a reception of an inter-device physical shared channel; obtaining a measurement value for the reference signal; and determining whether to drop a transmission of an inter-device physical feedback channel related to the reception of the inter-device physical shared channel, based on the measurement value and a threshold value.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a reference signal related to a first beam used in a reception of an inter-device physical shared channel; obtaining a measurement value for the reference signal; and determining whether to drop a transmission of an inter-device physical feedback channel related to the reception of the inter-device physical shared channel, based on the measurement value and a threshold value.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, a reference signal related to a first beam used in a reception of an inter-UE physical shared channel; obtaining a measurement value for the reference signal; and determining whether to drop a transmission of an inter-UE physical feedback channel related to the reception of the inter-UE physical shared channel, based on the measurement value and a threshold value.

According to an embodiment of the present disclosure, a non-transitory computer-readable storage medium storing instructions may be proposed. For example, the instructions, based on being executed, may cause a first device to: receive, from a second device, a reference signal related to a first beam used in a reception of an inter-device physical shared channel; obtain a measurement value for the reference signal; and determine whether to drop a transmission of an inter-device physical feedback channel related to the reception of the inter-device physical shared channel, based on the measurement value and a threshold value.

According to an embodiment of the present disclosure, a method for performing, by a second device, wireless communication may be proposed. For example, the method may comprise: transmitting, to a first device, a reference signal related to a first beam used in a transmission of an inter-device physical shared channel, wherein whether a transmission of an inter-device physical feedback channel related to the transmission of the inter-device physical shared channel is transmitted may be determined based on a measurement value for the reference signal.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, a reference signal related to a first beam used in a transmission of an inter-device physical shared channel, wherein whether a transmission of an inter-device physical feedback channel related to the transmission of the inter-device physical shared channel is transmitted may be determined based on a measurement value for the reference signal.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example in which a receiving UE drops an inter-UE physical feedback channel transmission for an inter-UE physical shared channel transmission performed by a transmitting UE, according to an embodiment of the present disclosure.
FIG. 10 shows inter-UE physical channel resources according to an embodiment of the present disclosure.
FIG. 11 shows a procedure for a first device to perform wireless communication, according to one embodiment of the present disclosure.
FIG. 12 shows a procedure for a second device to perform wireless communication, according to one embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

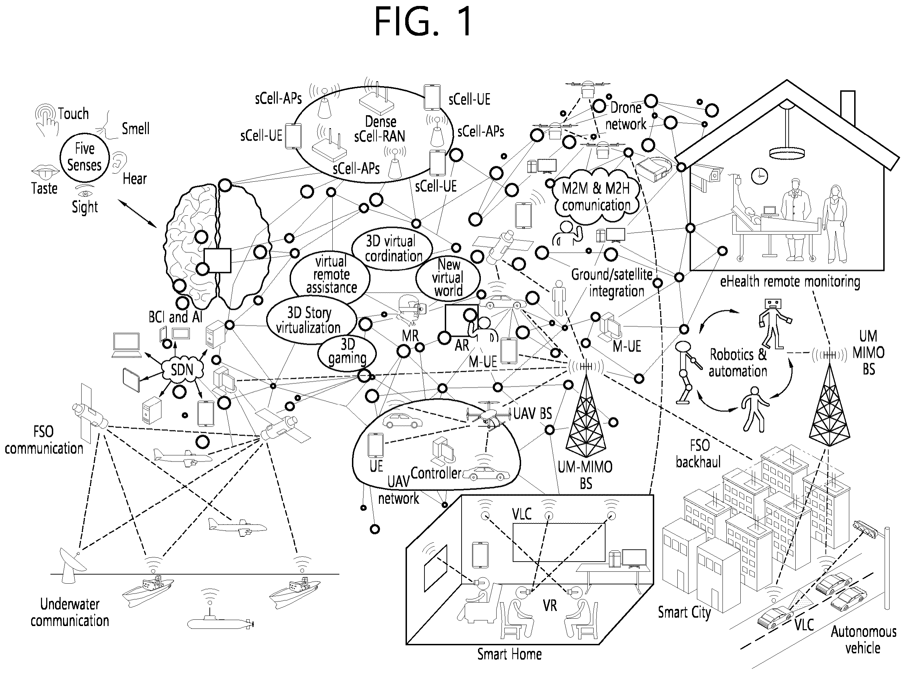

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

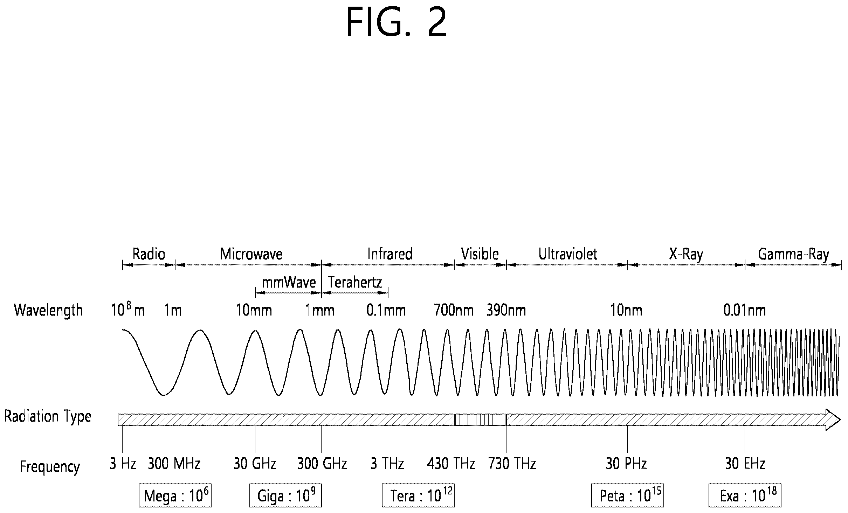

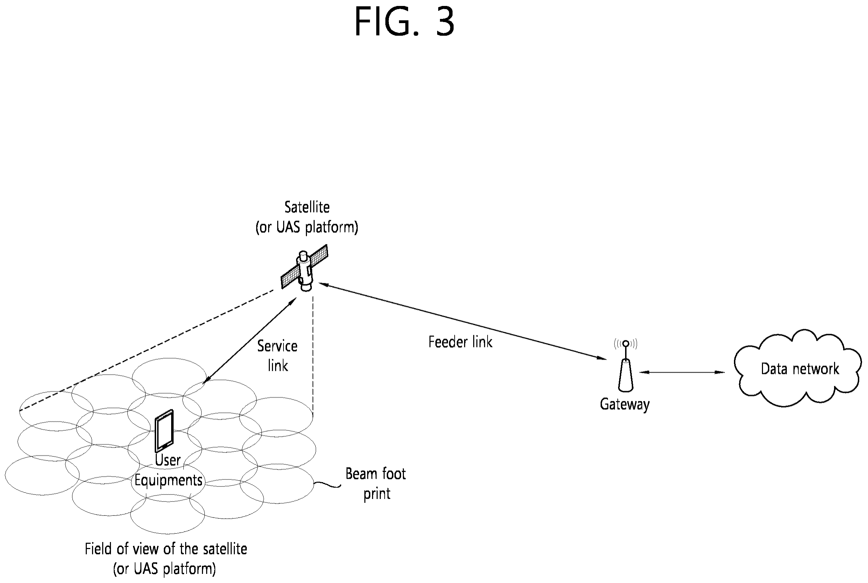

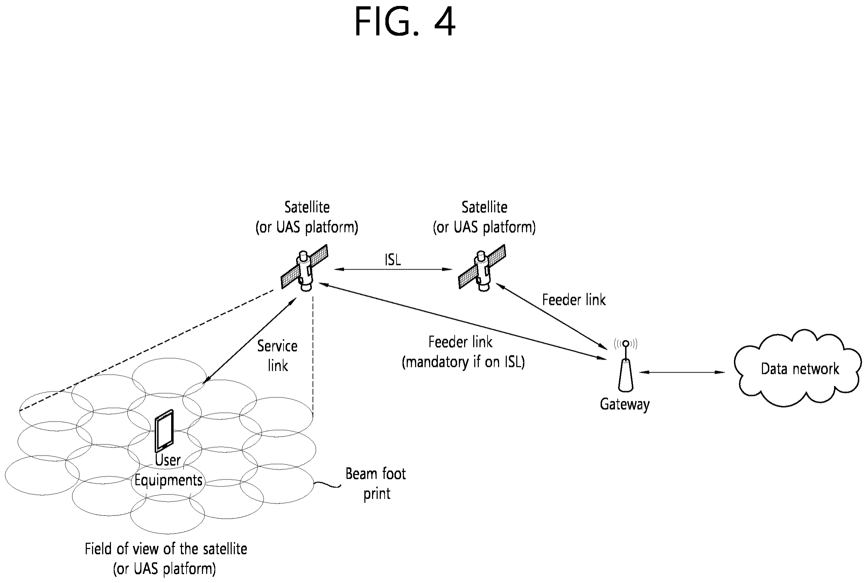

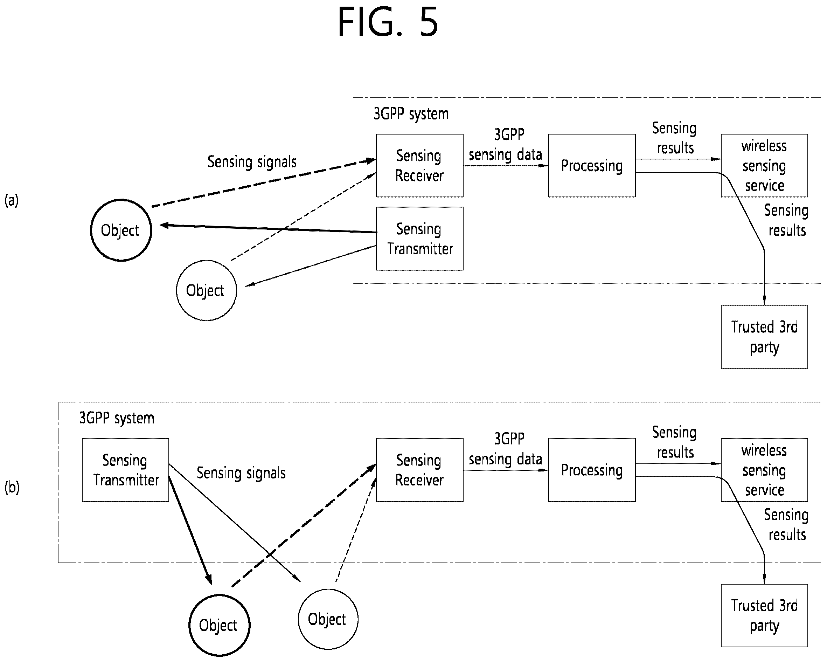

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

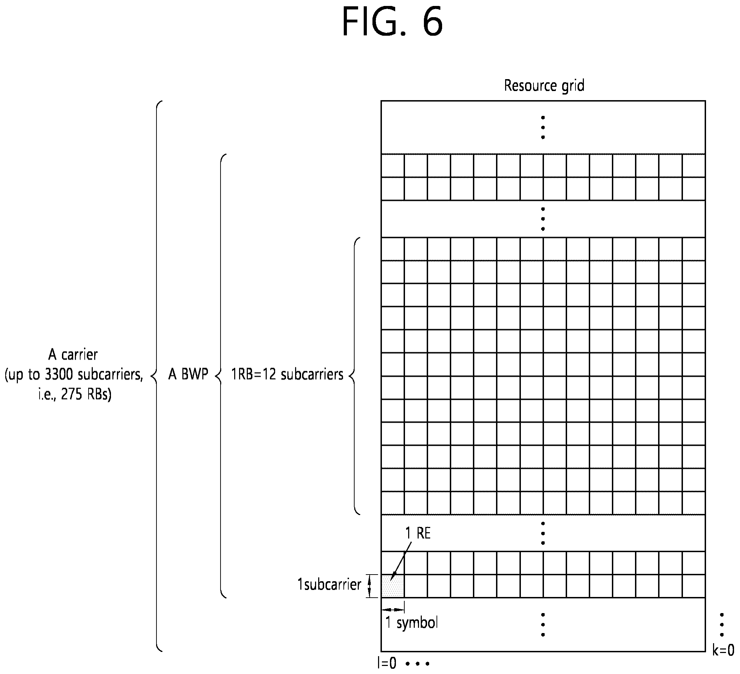

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

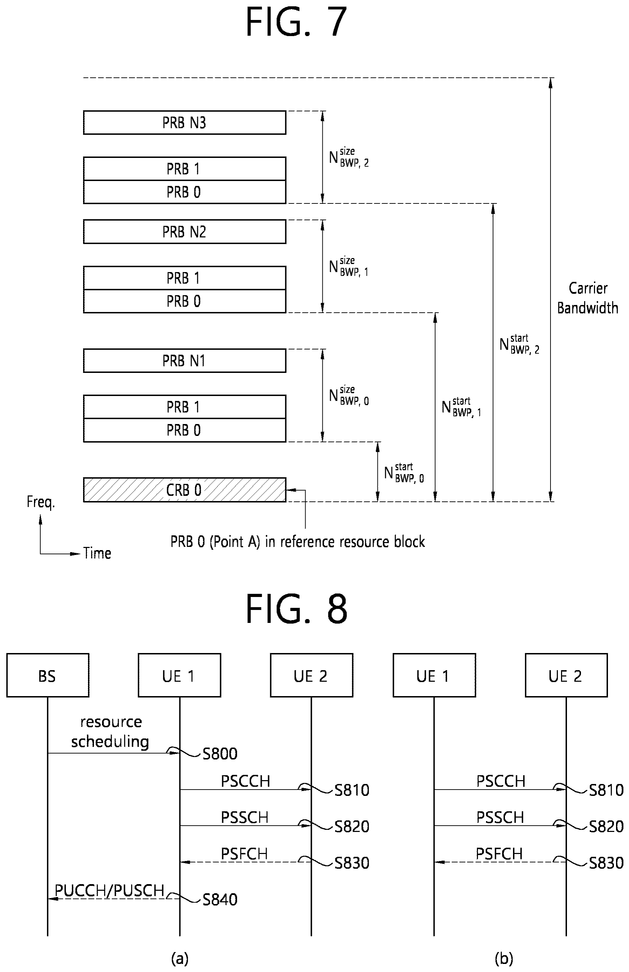

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (logz(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 3
- Beta_offset indicator - 2 bits as provided by higher layer parameter sl-BetaOffsets2ndSCI
- Number of DMRS port - 1 bit as defined in Table 4
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 4]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

**[Table 5]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

The following describes a UE procedure to report HARQ-ACK on a sidelink.

A UE may be instructed by SCI format that schedules a reception of PSSCH on one or more subchannels from N^{PSSCH}_{subch} to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot t'ₖ^{SL} (0≤k < T'ₘₐₓ) if k mod N^{PSFCH}_{PSSCH} = 0, where t'ₖ^{SL} is a slot in the resource pool, and T'ₘₐₓ is the number of slots in the resource pool within 10240 msec, and N^{PSFCH}_{PSSCH} is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with M^{PSFCH}_{PRB,set} of PRBs in a resource pool for PSFCH transmissions on PRBs in the resource pool. For the number of PSSCH slots related to a PSFCH slot that is less than or equal to N_{subch} and N^{PSFCH}_{PSSCH}, the number of subchannels for the resource pool provided by sl-NumSubchannel, a UE allocates the PRB [(i+j-N^{PSFCH}_{PSSCH})-M^{PSFCH}_{subch,slot}, (i+1+j-N^{PSFCH}_{PSSCH})-M^{PSFCH}_{subch,slot}-1] among the M_{PRB, set}^{PSFCH} PRB for slot i and subchannel j among the PSSCH slots associated with the PSFCH slot. Here, M^{PSFCH}_{subch,slot} = M^{PSFCH}_{PRB,set} / (N_{subch}-^{NPSFCH}_{PSSCH}), 0 ≤ i < N^{PSFCH}_{PSSCH}, 0 ≤ j < N_{subch}, and the allocations starts in ascending order for i and continues in ascending order for j. A UE expects M^{PSFCH}_{PRS,set} to be a multiple of N_{subch}·N^{PSFCH}_{PSSCH}.

A UE determines the number of available PSFCH resources for multiplexing HARQ-ACK information included in a PSFCH transmission as R^{PSFCH}_{PRB,CS} = N^{PSFCH}_{type}·M^{PSFCH}_{subch,slot}·N^{PSFCH}_{CS}. Here, N^{PSFCH}_{CS} may be the number of cyclic shift pairs for the resource pool, and based on an indication by the higher layer,
- N^{PSFCH}_{type} = 1, and M^{PSFCH}_{subch,slot} PRB may be related to the starting subchannel of the corresponding PSSCH,
- N^{PSFCH}_{type} = N^{PSSCH}_{subch} and N^{PSSCH}_{subch}·M^{PSFCH}_{subch,slot} PRB is related to one or more subchannels among N^{PSSCH}_{subch} subchannels of the corresponding PSSCH.

A PSFCH resource is indexed first in ascending order of a PRB indexes among N^{PSFCH}_{type}·M^{PSFCH}_{subch,slot} PRBs, after then, it is indexed in ascending order of cyclic shift pair indexes among N^{PSFCH}_{CS} cyclic shift pairs.

A UE determines an index of a PSFCH resource for a PSFCH transmission in response to the PSSCH reception as (P_{ID} + M_{ID}) mod R^{PSFCH}_{PRBB,CS}. Here, P_{ID} is a physical layer source ID provided by SCI format 2-A or 2-B scheduling a PSSCH reception, M_{ID} is an ID of a UE receiving a PSSCH, indicated from the higher layer when a UE detects SCI format 2-A in which a cast type indicator field value is "01", M_{ID} is 0 otherwise.

A UE determines m₀ value for calculating a cyclic shift α value from N^{PSFCH}_{CS} and a cyclic shift pair index which corresponds to a PSFCH resource index using Table 6.

**[Table 6]**

| N^{PSFCH}_{CS} | m₀ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 7, when a UE detects SCI format 2-A with a cast type indicator field value of "01" or "10", or as shown in Table 8, when a UE detects SCI format 2-B or SCI format 2-A with a cast type indicator field value of "11", a UE determines m_{cs} the value for calculating a cyclic shift α value. A UE applies one cyclic shift among cyclic shifts to a sequence used in a PSFCH transmission.

**[Table 7]**

| HARQ-ACK Value | 0 (NACK) | 1 (ACK) |
|---|---|---|
| Sequence cyclic shift | 0 | 6 |

**[Table 8]**

| HARQ-ACK Value | 0 (NACK) | 1 (ACK) |
|---|---|---|
| Sequence cyclic shift | 0 | N/A |

On the other hand, in inter-UE (e.g., SL) communication, a UE may perform transmission and/or reception based on multiple panels and/or beam directions, and in this case, it may be necessary to define a method for managing spatial settings, such as beam-related information or a spatial domain transmission/reception filter domain.

Meanwhile, in the case of downlink, a base station was able to indicate antenna port quasi-co-location (QCL) information to a UE via a transmission configuration indicator, and in particular, when receiving a downlink signal, the base station was able to configure/indicate whether the UE should assume that spatial reception parameters or beam information are the same as those of a specific synchronization block (e.g., SSB) or a channel state information reference signal (e.g., CSI-RS).

Meanwhile, in the case of uplink, a base station was able to configure/indicate to a UE that a spatial setting or a spatial domain transmission filter for transmitting a physical uplink shared channel (e.g., PUSCH) follows a spatial setting for transmitting a specific sounding reference signal (e.g., SRS) of the UE, transmitting a physical random access channel (e.g., PRACH), and/or receiving a downlink (e.g., DL) signal.

According to an embodiment of the present disclosure, an inter-UE physical channel (e.g., PSCCH/PSSCH) transmitting UE may declare a beam failure for all or a part of beams or transmission spatial settings based on HARQ-ACK feedback for inter-UE physical channel (e.g., PSCCH/PSSCH) it transmitted.

For example, an inter-UE physical channel (e.g., PSCCH/PSSCH) transmitting UE may declare a beam failure for all or a part of beams or transmission spatial settings when the number of times HARQ-ACK feedback for an inter-UE physical channel (e.g., PSCCH/PSSCH) it transmitted is not (continuously) received and/or a ratio of the number of times the HARQ-ACK feedback is not (continuously) received to an expected total number of HARQ-ACK feedback receptions is equal to or greater than a certain level (a predefined and/or (pre-)configured threshold value).

For example, in the above, a case where the transmitting UE fails to receive an inter-UE physical feedback channel (e.g., PSFCH) for transmission operation in an inter-UE physical feedback channel (e.g., PSFCH) occasion may not be included in the number of times the HARQ-ACK feedback is not received.

For example, the counting for the case where the HARQ-ACK feedback is not received may be performed per (transmission) spatial setting and/or per (transmission) spatial setting group for the inter-UE physical channel (e.g., PSCCH/PSSCH) transmission of the transmitting UE and/or per (reception) spatial setting for the inter-UE physical feedback channel (e.g., PSFCH) reception.

For example, when a beam failure is determined for a specific (transmission) spatial setting, an inter-UE physical channel (e.g., PSCCH/PSSCH) transmitting UE may report to a higher layer at least one of a beam failure indication, beam information for which the beam failure is determined, and/or (transmission and/or reception) spatial setting information.

For example, a target spatial setting and/or the number thereof for the beam failure declaration and/or beam failure detection may be (pre-)configured, configured by PC5-RRC, and/or determined by the UE.

For example, the inter-UE physical channel (e.g., PSCCH/PSSCH) may include a reference signal (e.g., RS) for the purpose of beam management (e.g., sidelink channel state information reference signal (e.g., SL CSI-RS)), and/or may not include data transmission.

For example, when an inter-UE physical channel (e.g., PSCCH/PSSCH) receiving UE fails to decode data and/or fails to detect a first SCI and/or a second SCI, the UE may omit an inter-UE physical feedback channel (e.g., PSFCH) transmission if a value of a measurement value for a beam-related reference signal (e.g., RS) (e.g., reference signal received power (e.g., RSRP), reference signal received quality (e.g., RSRQ), or signal to interference ratio (e.g., SINR)) is equal to or less than a specific threshold value.

For example, HARQ-ACK feedback related to beam management may be separate from information for success/failure of transport block (e.g., TB) decoding, and/or inter-UE physical feedback channel (e.g., PSFCH) resources may also be separated depending on the purpose.

For example, when transmitting an inter-UE physical feedback channel (e.g., PSFCH) for the purpose of beam management, the UE may transmit, together, at least one of a measurement value measured based on a beam-related reference signal (e.g., RS) received from the transmitting UE, information, beam-related reference signal (e.g., RS) information, and transmission and/or reception spatial setting information.

For example, information for whether the measurement value is equal to or greater than, equal to or less than, greater than, or less than a specific threshold value may be indicated through an inter-UE (e.g., SL) HARQ-ACK state or through a cyclic shift value.

For example, inter-UE physical feedback channel (e.g., PSFCH) resources may differ depending on the range of the measurement value.

For example, a reference signal (e.g., RS) transmitting UE may indicate to a receiving UE an inter-UE physical feedback channel (e.g., PSFCH) transmission for the purpose of beam management (e.g., SL HARQ-ACK feedback enabled/disabled).

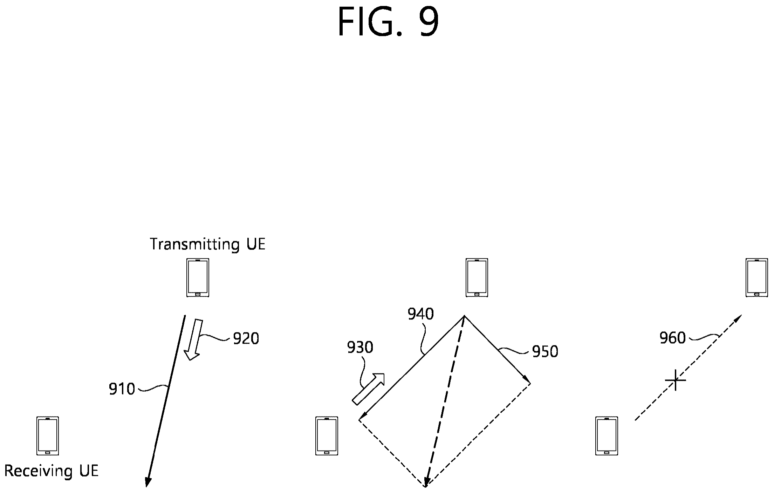

FIG. 9 shows an example in which a receiving UE drops an inter-UE physical feedback channel transmission for an inter-UE physical shared channel transmission performed by a transmitting UE, according to an embodiment of the present disclosure. The embodiment of FIG. 9 may be combined with various embodiments of the present disclosure.

Referring to FIG. 9, a transmitting UE that performs an inter-UE physical shared channel transmission and a receiving UE that receives the inter-UE physical shared channel transmission are shown.

For example, 910 shows a direction and signal strength of the inter-UE physical shared channel transmission performed by the transmitting UE. For example, the inter-UE physical shared channel transmission may be transmitted based on a first beam having the direction of 920. For example, the first beam may be a beam related to a first spatial setting.

For example, 930 may indicate a direction of a second beam related to a second spatial setting applied by the receiving UE to receive the inter-UE physical shared channel transmission. For example, 940 indicates a signal component that can be detected by the receiving UE through monitoring for 930 during the inter-UE physical shared channel transmission, and 950 may indicate a signal component that cannot be detected by the receiving UE through monitoring for 930 during the inter-UE physical shared channel transmission. For example, 940 and 950 may be orthogonal.

For example, referring to 960, the receiving UE may obtain (or derive) a measurement value for 940 received based on the second spatial setting. For example, the receiving UE may omit (or drop) an inter-UE physical feedback channel (e.g., PSFCH) transmission for the inter-UE physical shared channel based on the measurement value and a threshold value. For example, the measurement value may include at least one of a reference signal received power value, a reference signal received quality value, and a signal-to-noise ratio.

For example, an inter-UE physical channel (e.g., PSCCH/PSSCH) transmitting UE may perform resource reselection for transmission resources corresponding to a transmission beam and/or transmission spatial setting for which a beam failure is declared/determined. This may be because the sensing result used for transmission resource selection may differ depending on the transmission spatial setting.

According to an embodiment of the present disclosure, a UE may transmit an inter-UE physical control channel (e.g., PSCCH) and/or second inter-UE control information (e.g., 2nd SCI) at a plurality of start positions within a slot. For example, a mapping start symbol position for the second inter-UE control information (e.g., 2nd SCI) may be different from a start symbol position of the inter-UE physical control channel (e.g., PSCCH) (e.g., the first inter-UE physical shared channel demodulation reference signal (e.g., PSSCH DMRS) symbol position from the start position). For example, the UE may use different transmission spatial settings for symbol intervals distinguished from each of the start positions. This may be intended to enhance the detection performance for inter-UE (e.g., SL) control information when different transmission beams are transmitted within a short time duration.

For example, a UE may (re)start inter-UE physical channel (e.g., PSCCH/PSSCH) mapping at a plurality of start positions within a slot. That is, when there are two start positions within the slot, the UE may transmit two inter-UE physical channels (e.g., PSCCH/PSSCH) within the slot.

For example, in the mapping for each inter-UE physical channel (e.g., PSCCH/PSSCH), an interval from each start position to the position before the next start position may be assumed as a symbol duration of the inter-UE physical shared channel (e.g., PSSCH) and/or a symbol duration of inter-UE communication symbols (e.g., SL symbols) (with or without including transmission-reception switching symbols).

For example, a time gap may exist between each of the inter-UE physical channels (e.g., PSCCH/PSSCH), and/or the time gap may correspond to one or two orthogonal frequency division multiplexing (e.g., OFDM) symbols and/or may be a (pre-)configured value. For example, a processing time for the UE to change a beam and/or transmission spatial setting may be included in the time gap.

For example, the plurality of inter-UE physical channels (e.g., PSCCH/PSSCH) may be for the same transport block (e.g., TB). For example, a size of the transport block (e.g., TB) for the plurality of inter-UE physical channels (e.g., PSCCH/PSSCH) may be determined based on at least one of a time interval length of a partition configured based on the first start position, a time interval length of a partition configured based on the second start position, a symbol interval length assuming a single inter-UE physical channel (e.g., PSCCH/PSSCH) within the slot, and a symbol interval length available for inter-UE communication (e.g., SL communication) within the slot.

For example, when a UE transmits an inter-UE physical control channel (e.g., PSCCH) and/or second inter-UE control information (e.g., 2nd SCI) at a plurality of start positions within a slot, the UE may not transmit an inter-UE physical shared channel (e.g., PSSCH) and/or may not transmit a transport block (e.g., TB) within the slot. And/or, for example, in this case, the UE may transmit an inter-UE physical shared channel demodulation reference signal (e.g., PSSCH DMRS) and/or a sidelink channel state information reference signal (e.g., SL CSI-RS) within the slot.

For example, a UE may (re)start mapping of an inter-UE physical shared channel demodulation reference signal (e.g., PSSCH DMRS) and/or a sidelink channel state information reference signal (e.g., SL CSI-RS) at a plurality of start positions within a slot. For example, a (start) symbol position for the sidelink channel state information reference signal (e.g., SL CSI-RS) may be (pre-)configured per start position of the inter-UE physical channel (e.g., PSCCH/PSSCH) within the slot, and/or a reference point for the (start) symbol position of the sidelink channel state information reference signal (e.g., SL CSI-RS) may be the start position of the inter-UE physical channel (e.g., PSCCH/PSSCH) within the slot.

For example, when a UE transmits an inter-UE physical control channel (e.g., PSCCH) and/or an inter-UE physical shared channel (e.g., PSSCH) at a plurality of start positions within a slot, a demodulation reference signal (e.g., PSSCH DMRS) pattern and/or a phase tracking reference signal (e.g., PT-RS) pattern for the inter-UE physical shared channel may be maintained the same as in a case where the UE transmits an inter-UE physical channel (e.g., PSCCH/PSSCH) at a single start position within the slot.

For example, whether to maintain the demodulation reference signal (e.g., DMRS) pattern and/or the phase tracking reference signal (e.g., PT-RS) pattern may vary per resource pool (or may be (pre-)configured per resource pool), and/or the demodulation reference signal (e.g., DMRS) pattern and/or the phase tracking reference signal (e.g., PT-RS) pattern may be maintained for a resource pool shared with a UE that supports only inter-UE physical channels (e.g., PSCCH/PSSCH) based on a single start position within a slot and/or a UE of at least a previous release.

For example, when a UE transmits an inter-UE physical control channel (e.g., PSCCH) and/or an inter-UE physical shared channel (e.g., PSSCH) at a plurality of start positions within a slot, a reference signal (e.g., RS) referred to for sensing and/or RSRP measurement may be limited to an inter-UE physical control channel demodulation reference signal (e.g., PSCCH DMRS). For example, such limitation may vary per resource pool (or may be (pre-)configured per resource pool), and/or may be applied to a resource pool shared with a UE that supports only inter-UE physical channels (e.g., PSCCH/PSSCH) based on a single start position within a slot and/or a UE of at least a previous release.

For example, when a UE receives inter-UE physical channels (e.g., PSCCH/PSSCH) based on a plurality of start positions within a slot, the UE may perform an automatic gain control (e.g., AGC) operation for each of the start positions. For example, when receiving inter-UE physical channels (e.g., PSCCH/PSSCH) based on a plurality of start positions within a slot, the UE may perform channel estimation for each time interval distinguished based on the respective start positions, and it may not be assumed that a channel condition for a specific time interval is derived from a reference signal (e.g., RS) in another time interval, and/or it may be assumed that the channel condition for the specific time interval is derived from a reference signal (e.g., RS) within the same time interval. This may be because phase discontinuity may occur when the transmitting UE changes a transmission spatial setting per time interval.

For example, a transmission beam or transmission spatial setting may differ among an inter-UE physical control channel (e.g., PSCCH), second inter-UE control information (e.g., 2nd SCI), and/or an inter-UE physical shared channel (e.g., PSSCH), and in such a case, the UE may transmit the inter-UE physical control channel (e.g., PSCCH) and/or the second inter-UE control information (e.g., 2nd SCI) and/or the inter-UE physical shared channel (e.g., PSSCH) by a time division multiplexing (e.g., TDM) scheme.

For example, a transmission beam or transmission spatial setting may differ among an inter-UE physical control channel (e.g., PSCCH), second inter-UE control information (e.g., 2nd SCI), and/or an inter-UE physical shared channel (e.g., PSSCH), and in such a case, when mapping second inter-UE control information (e.g., 2nd SCI) and/or inter-UE physical shared channel (e.g., PSSCH) that is frequency division multiplexed (e.g., FDMed) (where symbol duration is overlapped) with an inter-UE physical control channel (e.g., PSCCH), the UE may repeat mapping of information that is mapped to a region time-division multiplexed with the inter-UE physical control channel (e.g., PSCCH), and/or may ensure that coded symbols corresponding to parity bits (e.g., per configured grant (e.g., CG)) are preferentially mapped.

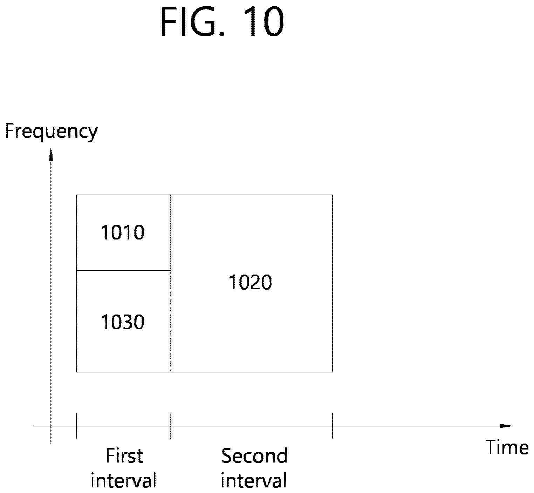

FIG. 10 shows inter-UE physical channel resources according to an embodiment of the present disclosure. The embodiment of FIG. 10 may be combined with various embodiments of the present disclosure.

Referring to FIG. 10, inter-UE physical channel resources including 1010, 1020, and 1030 are shown. For example, a time domain of the inter-UE physical channel resources may be one slot.

For example, in a first interval, a transmitting UE may perform a transmission operation based on a first spatial setting. For example, in a second interval, the transmitting UE may perform a transmission operation based on a second spatial setting.

For example, an inter-UE physical control channel may be transmitted at 1010. For example, an inter-UE physical shared channel may be transmitted at 1020.

For example, at 1030, information mapped to 1010 may be repeatedly mapped, and/or coded symbols corresponding to parity bits may be mapped.

Meanwhile, HARQ-based radio link failure (e.g., RLF) detection operation and HARQ-based beam failure detection operation may be performed simultaneously. For example, a first set of transmission-or-reception spatial settings corresponding to an operation of counting (consecutive) discontinuous transmissions (e.g., DTX) for radio link failure (e.g., RLF) detection may be the same as and/or a superset of a second set of transmission spatial settings corresponding to an operation of counting (consecutive) discontinuous transmissions (e.g., DTX) for beam failure detection.

According to an embodiment of the present disclosure, a spatial setting information for an inter-UE (e.g., SL) transmission is changed/managed/configured/indicated differently or independently per cast type, per unicast session, per receiver for an inter-UE (e.g., SL) transmission, per inter-UE (e.g., SL) channel type, per (transmission and/or reception) resource pool, per mobility-related information of a UE (e.g., speed, velocity, direction, acceleration, location, height, etc.) and/or per transmission priority value, per reception priority value, per inter-UE (e.g., SL) transmission where inter-UE (e.g., SL) HARQ-ACK feedback is enabled/disabled, per inter-UE (e.g., SL) HARQ-ACK feedback option, per service quality (e.g., QoS) parameter, per (remaining) packet delay budget (e.g., PDB), per HARQ process, per beam process, per source ID, per destination ID, and/or per transport block (e.g., TB).

Various schemes of the present disclosure may be differently applied per unicast session (group), per cast type, per transmission priority value, per reception priority value, per inter-UE (e.g., SL) transmission with HARQ-ACK feedback enabled/disabled, per inter-UE (e.g., SL) HARQ-ACK feedback option, per QoS parameter, per (remaining) packet delay budget (e.g., PDB), per congestion control level, per transmission and/or reception resource pool, per mobility-related information of the UE (e.g., speed, velocity, direction, acceleration, location, altitude, etc.), per inter-UE (e.g., SL) transmission or reception, per HARQ process, per beam process, per source ID, per destination ID, and/or per transport block (e.g., TB). For example, in various embodiments of the present disclosure, a unit of (pre-)configuration may be configured in the form of the above-mentioned different combinations.

For example, in various embodiments of the present disclosure, parameter indication and management through an inter-UE physical control channel (e.g., PSCCH) and/or an inter-UE physical shared channel (e.g., PSSCH) may be performed in units of the above-mentioned different combinations.

In various embodiments of the present disclosure, spatial setting and/or transmission configuration indicator (e.g., TCI) information and/or QCL information may refer to each other, and/or may be interpreted as being replaced with beam-related information, beam direction, spatial domain transmission/reception filter, and the like.

In various embodiments of the present disclosure, the spatial setting information for transmission being the same may mean that the spatial domain transmission filter of the UE is the same for two different transmission signals.

In various embodiments of the present disclosure, the spatial setting information for reception being the same may mean that two different reception signals have a QCL 'TypeD' relationship and/or a relationship in which the same spatial reception parameters are used.

In various embodiments of the present disclosure, (pre-)configuration may refer to pre-configuration (e.g., signaling-based from a server or at the time of product shipment), configuration from a base station, and/or configuration through PC5-RRC between UEs.

Various schemes of the present disclosure may be applied differently per inter-UE (e.g., SL) channel. Various schemes of the present disclosure may be applied differently depending on the type of information included in the inter-UE (e.g., SL) channel.

According to an embodiment of the present disclosure, an inter-UE physical channel (e.g., PSCCH/PSSCH) transmitting UE may count a number of consecutive discontinuous transmissions (e.g., DTX) on inter-UE physical feedback channel reception opportunities related to a specific transmission spatial setting for the inter-UE physical channel (e.g., PSCCH/PSSCH) transmission. If, for example, the number of the consecutive discontinuous transmissions reaches a threshold value, the physical layer of the UE may provide a beam failure instance indication to a higher layer. If, for example, the MAC layer of the UE receives the beam failure instance indication, the MAC layer may declare an inter-UE (e.g., SL) beam failure.

According to an embodiment of the present disclosure, the following operations may be supported for an inter-UE (e.g., SL) beam failure declaration.

For example, when the number of consecutive discontinuous transmissions on inter-UE physical feedback channel reception opportunities related to all or a part of transmission spatial settings for inter-UE physical channel (e.g., PSCCH/PSSCH) transmission reaches a threshold value (e.g., 1), the physical layer of the UE may provide a beam failure instance indication to a higher layer.

For example, it may be necessary to discuss a method by which an inter-UE physical channel (e.g., PSCCH/PSSCH) receiving UE determines the inter-UE (e.g., SL) beam failure instance.

For example, to support an inter-UE physical channel (e.g., PSCCH/PSSCH) receiving UE in determining a beam failure, it may be necessary to design periodic reference signals (e.g., RS), and it may need to be ensured that such reference signals are transmitted regardless of the inter-UE (e.g., SL) resource (re)selection procedure. If the reference signals can be omitted on the transmitting UE side, the receiving UE may not be able to distinguish between a case in which the transmitting UE did not transmit the reference signals and a case in which the transmitting UE did transmit them but the beam quality of the transmitted reference signals was poor. This may result in inaccurate inter-UE (e.g., SL) beam detection.

To address the above issue, it may be necessary that resources and/or sequences and/or time-and/or-frequency domain OCCs for an inter-UE channel state information reference signal (e.g., SL CSI-RS), which is to be applied to the inter-UE channel state information reference signal (e.g., CSI-RS), are determined based on information provided through UE ID(s) or PC5-RRC signaling.

According to an embodiment of the present disclosure, for an inter-UE (e.g., SL) beam failure recovery procedure for inter-UE (e.g., SL) transmission of UE 1, at least one of the following may be supported.

### option 1:

For example, UE 1 may transmit candidate reference signals (e.g., RS) and/or channel state information reporting triggering multiple times with the same or different transmission spatial settings.

For example, in each inter-UE (e.g., SL) transmission opportunity for candidate reference signals (e.g., RS) and/or channel state information (e.g., CSI) reporting triggering, a response window may be determined.

For example, if UE 2 successfully detects candidate reference signals (e.g., RS) and/or inter-UE channel state information (e.g., SL CSI) reporting triggering with specific transmission spatial setting(s), and one or more measurement results based on the reference signal(s) (e.g., reference signal received power (e.g., RSRP), reference signal received quality (e.g., RSRQ), or signal-to-noise ratio (e.g., SINR)) are higher than a specific level, UE 2 may report the measurement results based on the one or more reference signal(s) within a response window corresponding to the received candidate reference signals (e.g., RS) and/or inter-UE channel state information (e.g., SL CSI) reporting triggering.

For example, a transmission spatial setting for inter-UE channel state information (e.g., SL CSI) reporting from UE 2 may be determined based on a reception spatial setting of UE 2 for receiving the candidate reference signals (e.g., RS) and/or a transmission spatial setting related to the response window.

### Option 2:

UE 1 may transmit candidate reference signals (e.g., RS) multiple times with the same or different transmission spatial settings.

For example, each inter-UE (e.g., SL) transmission opportunity may have an inter-UE physical feedback channel (e.g., PSFCH) opportunity.

For example, if UE 2 successfully detects candidate reference signals (e.g., RS), and measurement results based on the reference signals (e.g., reference signal received power (e.g., RSRP), reference signal received quality (e.g., RSRQ), or signal-to-noise ratio (e.g., SINR)) are higher than a specific level, UE 2 may transmit an inter-UE physical feedback channel at an inter-UE physical feedback channel (e.g., PSFCH) opportunity corresponding to the received candidate reference signals (e.g., RS).

For example, a transmission spatial setting for an inter-UE physical feedback channel transmission from UE 2 may be determined based on a reception spatial setting of UE 2 for receiving the candidate reference signals (e.g., RS) and/or a transmission spatial setting related to the inter-UE physical feedback channel opportunity.

In FR2, during inter-UE communication (e.g., SL communication), a UE may perform transmission and/or reception based on multiple panels and/or beam directions. In this case, a spatial setting, including beam-related information or a spatial domain transmission/reception filter (e.g., spatial domain transmission/reception filter), needs to be defined.

Meanwhile, based on the beam-related information, a beam-related reference signal may be transmitted together during inter-UE physical channel (e.g., PSCCH/PSSCH) transmission. For example, an inter-UE physical channel (e.g., PSCCH/PSSCH) receiving UE may transmit HARQ-ACK information for the inter-UE physical channel (e.g., PSCCH/PSSCH) transmission through an inter-UE physical feedback channel (e.g., PSFCH) transmission.

For example, if the transmission beam of the transmitting UE and the reception beam of the receiving UE are not properly aligned with each other at the appropriate time, the detection performance may significantly degrade.

According to an embodiment of the present disclosure, a receiving UE may omit an inter-UE physical feedback channel (e.g., PSFCH) transmission for reporting a NACK related to reception of an inter-UE physical channel (e.g., PSCCH/PSSCH), based on a measurement value for the received beam-related reference signal.

For example, a transmitting UE may declare a beam failure for a transmission spatial setting related to at least one beam based on information related to reception of HARQ feedback. For example, in inter-UE physical shared channel (e.g., PSSCH) transmission operation, spatial settings related to transmission of an inter-UE physical control channel (e.g., PSCCH) and an inter-UE physical shared channel (e.g., PSSCH) may be different, and in such a case, the transmitting UE may perform inter-UE physical channel (e.g., PSCCH/PSSCH) transmission by a time division multiplexing (TDM) scheme. For example, it may be assumed that the beam settings between the inter-UE physical control channel (e.g., PSCCH) and the inter-UE physical shared channel (e.g., PSSCH) within the same slot are different.

For example, according to various embodiments of the present disclosure, for reception of an inter-UE physical shared channel (e.g., PSSCH) with respect to a specific beam, an inter-UE physical feedback channel (e.g., PSFCH) transmission corresponding to the inter-UE physical shared channel (e.g., PSSCH) may be omitted according to beam quality.

For example, according to an embodiment of the present disclosure, in the FR2 region, when an inter-UE physical shared channel (e.g., PSSCH) is transmitted in a beam-based manner, it is possible to avoid waste of radio resources by dropping an inter-UE physical feedback channel (e.g., PSFCH) transmission based on the reception status of a reference signal for the beam. For example, according to an embodiment of the present disclosure, by using an inter-UE physical feedback channel (e.g., PSFCH) linked to the inter-UE physical shared channel (e.g., PSSCH) to report beam quality information, beam quality may be accurately measured in a state where the transmission beam and the reception beam are aligned.

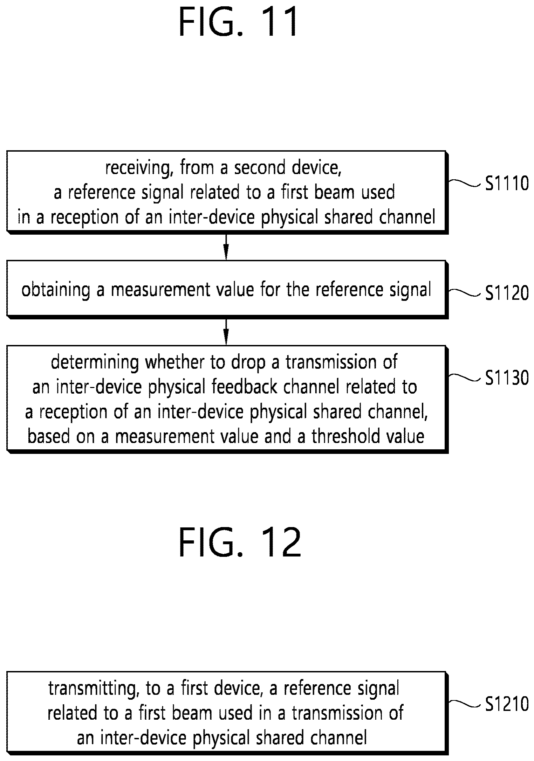

FIG. 11 shows a procedure in which a first device performs wireless communication according to an embodiment of the present disclosure. The embodiment of FIG. 11 may be combined with various embodiments of the present disclosure.

Referring to FIG. 11, in step S1110, a first device may receive, from a second device, a reference signal related to a first beam used in a reception of an inter-device physical shared channel. In step S1120, the first device may obtain a measurement value for the reference signal. In step S1130, the first device may determine whether to drop a transmission of an inter-device physical feedback channel related to the reception of the inter-device physical shared channel, based on the measurement value and a threshold value.

For example, the transmission of the inter-device physical feedback channel may be determined to be dropped based on the measurement value and the threshold value.

For example, additionally, the first device may monitor, from the second device, the inter-device physical shared channel based on the first beam.

For example, the reception of the inter-device physical shared channel may include a reception of first inter-device control information through an inter-device physical control channel or a reception of second inter-device control information through the inter-device physical shared channel.

For example, the reception through the inter-device physical control channel may be performed by using a second beam, and the second beam may be related to a second spatial setting different from a first spatial setting related to the first beam.

For example, the measurement value may include at least one of a reference signal received power value, a reference signal received quality value, or a signal to noise ratio.

For example, the reference signal may be included in the inter-device physical shared channel.

For example, the inter-device physical shared channel may not include an inter-device communication data.

For example, the reference signal may be an inter-device channel state information reference signal.

For example, whether to drop the transmission of the inter-device physical feedback channel may be determined based on a reception failure of the inter-device physical shared channel.

For example, the transmission of the inter-device physical feedback channel may be determined not to be dropped, based on the measurement value and the threshold value.

For example, additionally, the first device may perform the transmission of the inter-device physical feedback channel, including the measurement value, based on an inter-device physical feedback channel resource.

For example, the inter-device physical feedback channel resource may be determined based on the measurement value.

The above-described embodiment may be applied to various devices described below. For example, a processor 102 of a first device 100 may control a transceiver 106 to receive, from a second device 200, a reference signal related to a first beam used in a reception of an inter-device physical shared channel. And, the processor 102 of the first device 100 may obtain a measurement value for the reference signal. And, the processor 102 of the first device 100 may determine whether to drop a transmission of an inter-device physical feedback channel related to the reception of the inter-device physical shared channel, based on the measurement value and a threshold value.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a reference signal related to a first beam used in a reception of an inter-device physical shared channel; obtaining a measurement value for the reference signal; and determining whether to drop a transmission of an inter-device physical feedback channel related to the reception of the inter-device physical shared channel, based on the measurement value and a threshold value.

For example, the transmission of the inter-device physical feedback channel may be determined to be dropped based on the measurement value and the threshold value.

For example, additionally, the instructions may further comprise: monitoring, from the second device, the inter-device physical shared channel based on the first beam.

For example, the reception of the inter-device physical shared channel may include a reception of first inter-device control information through an inter-device physical control channel or a reception of second inter-device control information through the inter-device physical shared channel.

For example, the reception through the inter-device physical control channel may be performed by using a second beam, and the second beam may be related to a second spatial setting different from a first spatial setting related to the first beam.

For example, the measurement value may include at least one of a reference signal received power value, a reference signal received quality value, or a signal to noise ratio.

For example, the reference signal may be included in the inter-device physical shared channel.

For example, the inter-device physical shared channel may not include an inter-device communication data.

For example, the reference signal may be an inter-device channel state information reference signal.

For example, whether to drop the transmission of the inter-device physical feedback channel may be determined based on a reception failure of the inter-device physical shared channel.

For example, the transmission of the inter-device physical feedback channel may be determined not to be dropped, based on the measurement value and the threshold value.

For example, additionally, the instructions may further comprise: performing the transmission of the inter-device physical feedback channel, including the measurement value, based on an inter-device physical feedback channel resource.

For example, the inter-device physical feedback channel resource may be determined based on the measurement value.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, a reference signal related to a first beam used in a reception of an inter-UE physical shared channel; obtaining a measurement value for the reference signal; and determining whether to drop a transmission of an inter-UE physical feedback channel related to the reception of the inter-UE physical shared channel, based on the measurement value and a threshold value.

According to an embodiment of the present disclosure, a non-transitory computer-readable storage medium storing instructions may be proposed. For example, the instructions, based on being executed, may cause a first device to: receive, from a second device, a reference signal related to a first beam used in a reception of an inter-device physical shared channel; obtain a measurement value for the reference signal; and determine whether to drop a transmission of an inter-device physical feedback channel related to the reception of the inter-device physical shared channel, based on the measurement value and a threshold value.

FIG. 12 shows a procedure in which a second device performs wireless communication according to an embodiment of the present disclosure. The embodiment of FIG. 12 may be combined with various embodiments of the present disclosure.

Referring to FIG. 12, in step S 1210, a second device may transmit, to a first device, a reference signal related to a first beam used in a transmission of an inter-device physical shared channel. For example, whether a transmission of an inter-device physical feedback channel related to the transmission of the inter-device physical shared channel is transmitted may be determined based on a measurement value for the reference signal.

For example, the transmission of the inter-device physical shared channel may include a transmission of first inter-device control information through an inter-device physical control channel, or a transmission of second inter-device control information through the inter-device physical shared channel, the transmission through the inter-device physical control channel may be performed by using a second beam, and the second beam may be related to a second spatial setting different from a first spatial setting related to the first beam.

The above-described embodiment may be applied to various devices described below. For example, a processor 202 of a second device 200 may control a transceiver 206 to transmit, to a first device 100, a reference signal related to a first beam used in a transmission of an inter-device physical shared channel. For example, whether a transmission of an inter-device physical feedback channel related to the transmission of the inter-device physical shared channel is transmitted may be determined based on a measurement value for the reference signal.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, a reference signal related to a first beam used in a transmission of an inter-device physical shared channel, wherein whether a transmission of an inter-device physical feedback channel related to the transmission of the inter-device physical shared channel is transmitted may be determined based on a measurement value for the reference signal.

For example, the transmission of the inter-device physical shared channel may include a transmission of first inter-device control information through an inter-device physical control channel, or a transmission of second inter-device control information through the inter-device physical shared channel, the transmission through the inter-device physical control channel may be performed by using a second beam, and the second beam may be related to a second spatial setting different from a first spatial setting related to the first beam.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

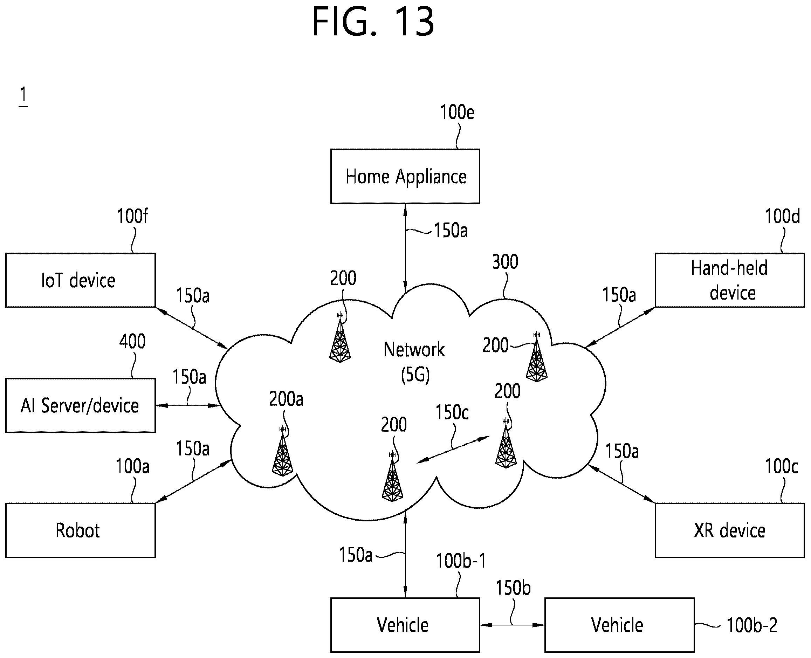

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

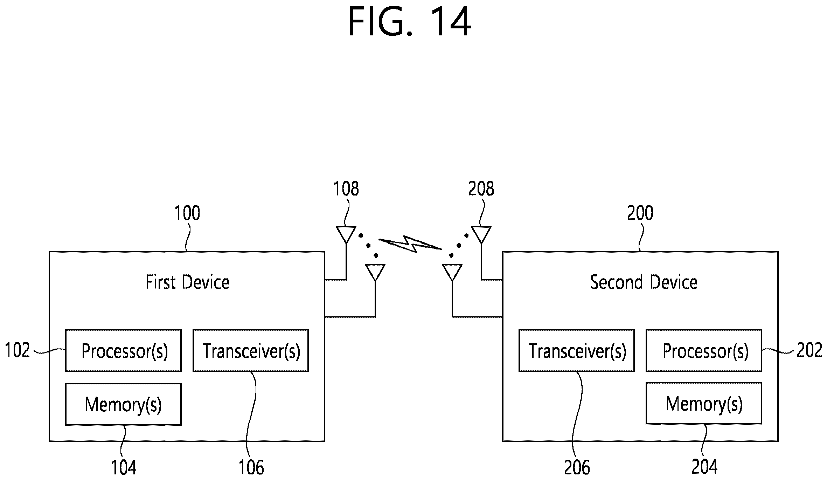

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

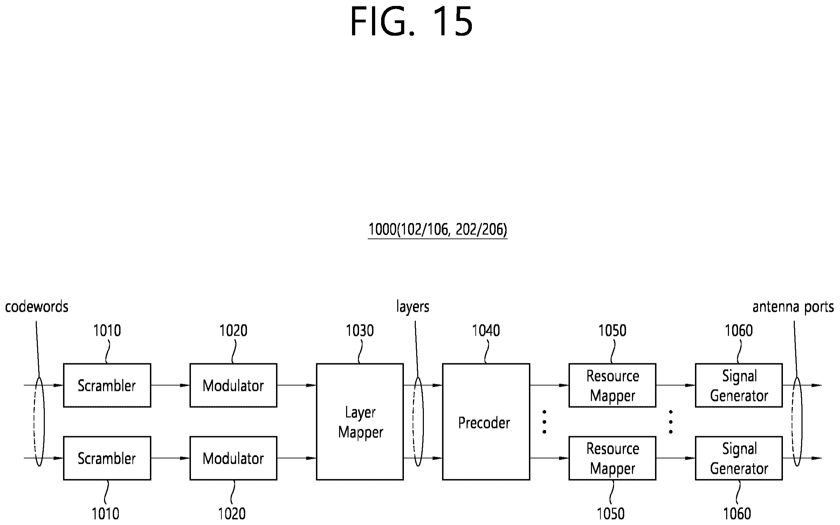

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

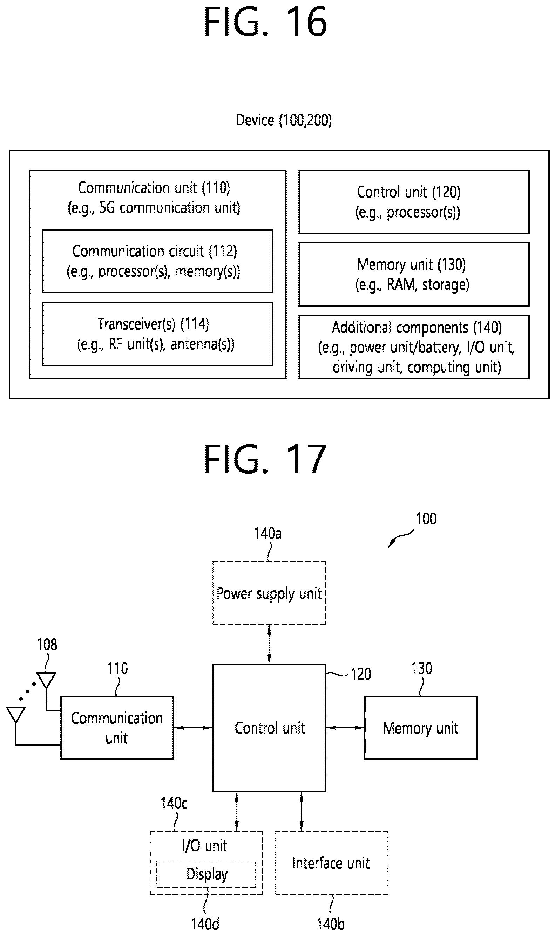

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

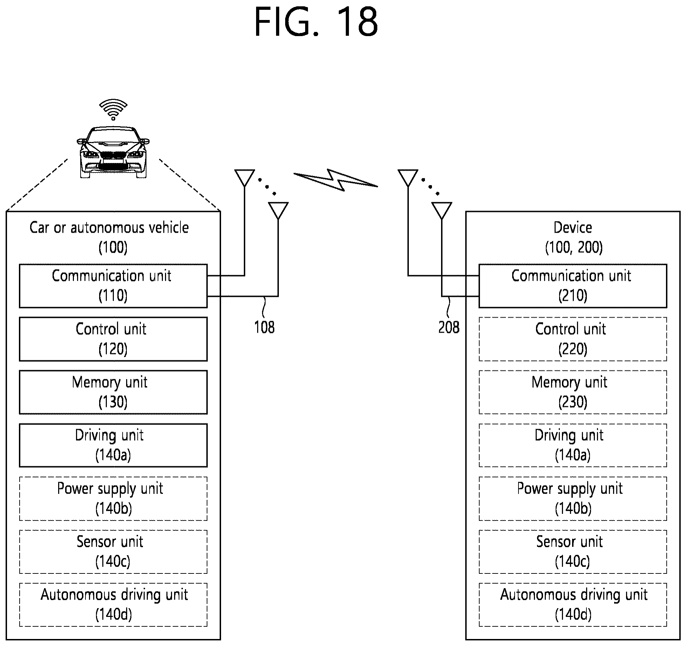

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
receiving, from a second device, a reference signal related to a first beam used in a reception of an inter-device physical shared channel;
obtaining a measurement value for the reference signal; and
determining whether to drop a transmission of an inter-device physical feedback channel related to the reception of the inter-device physical shared channel, based on the measurement value and a threshold value.

2. The method of claim 1, wherein the transmission of the inter-device physical feedback channel is determined to be dropped based on the measurement value and the threshold value.

3. The method of claim 1, further comprising:
monitoring, from the second device, the inter-device physical shared channel based on the first beam.

4. The method of claim 1, wherein the reception of the inter-device physical shared channel includes a reception of first inter-device control information through an inter-device physical control channel or a reception of second inter-device control information through the inter-device physical shared channel.

5. The method of claim 4, wherein the reception through the inter-device physical control channel is performed by using a second beam, and
wherein the second beam is related to a second spatial setting different from a first spatial setting related to the first beam.

6. The method of claim 1, wherein the measurement value includes at least one of a reference signal received power value, a reference signal received quality value, or a signal to noise ratio.

7. The method of claim 1, wherein the reference signal is included in the inter-device physical shared channel.

8. The method of claim 1, wherein the inter-device physical shared channel does not include an inter-device communication data.

9. The method of claim 1, wherein the reference signal is an inter-device channel state information reference signal.

10. The method of claim 1, wherein whether to drop the transmission of the inter-device physical feedback channel is determined based on a reception failure of the inter-device physical shared channel.

11. The method of claim 1, wherein the transmission of the inter-device physical feedback channel is determined not to be dropped, based on the measurement value and the threshold value.

12. The method of claim 11, further comprising:
performing the transmission of the inter-device physical feedback channel, including the measurement value, based on an inter-device physical feedback channel resource.

13. The method of claim 12, wherein the inter-device physical feedback channel resource is determined based on the measurement value.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
receiving, from a second device, a reference signal related to a first beam used in a reception of an inter-device physical shared channel;
obtaining a measurement value for the reference signal; and
determining whether to drop a transmission of an inter-device physical feedback channel related to the reception of the inter-device physical shared channel, based on the measurement value and a threshold value.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
receiving, from a second UE, a reference signal related to a first beam used in a reception of an inter-UE physical shared channel;
obtaining a measurement value for the reference signal; and
determining whether to drop a transmission of an inter-UE physical feedback channel related to the reception of the inter-UE physical shared channel, based on the measurement value and a threshold value.

16. A non-transitory computer-readable storage medium storing instructions that, based on being executed, cause a first device to:
receive, from a second device, a reference signal related to a first beam used in a reception of an inter-device physical shared channel;
obtain a measurement value for the reference signal; and
determine whether to drop a transmission of an inter-device physical feedback channel related to the reception of the inter-device physical shared channel, based on the measurement value and a threshold value.

17. A method for performing, by a second device, wireless communication, the method comprising:
transmitting, to a first device, a reference signal related to a first beam used in a transmission of an inter-device physical shared channel,
wherein whether a transmission of an inter-device physical feedback channel related to the transmission of the inter-device physical shared channel is transmitted is determined based on a measurement value for the reference signal.

18. The method of claim 17, wherein the transmission of the inter-device physical shared channel includes a transmission of first inter-device control information through an inter-device physical control channel, or a transmission of second inter-device control information through the inter-device physical shared channel,
wherein the transmission through the inter-device physical control channel is performed by using a second beam, and
wherein the second beam is related to a second spatial setting different from a first spatial setting related to the first beam.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
transmitting, to a first device, a reference signal related to a first beam used in a transmission of an inter-device physical shared channel,
wherein whether a transmission of an inter-device physical feedback channel related to the transmission of the inter-device physical shared channel is transmitted is determined based on a measurement value for the reference signal.

20. The second device of claim 19, wherein the transmission of the inter-device physical shared channel includes a transmission of first inter-device control information through an inter-device physical control channel, or a transmission of second inter-device control information through the inter-device physical shared channel,
wherein the transmission through the inter-device physical control channel is performed by using a second beam, and
wherein the second beam is related to a second spatial setting different from a first spatial setting related to the first beam.
